# EUROPEAN PATENT APPLICATION

(11) **EP 4 534 572 A1**
(43) Date of publication of application: **09.04.2025**
(21) Application number: 23815652.5
(22) Date of filing: 28.04.2023
(51) Int. Cl.: C08F 220/36, C08F 8/34, C08F 8/42, C08F 220/38, C09D 133/04

(54) **HYDROPHILIC COPOLYMER AND HYDROPHILIC COMPOSITION**

(30) Priority: 30.05.2022 JP 2022087651
(71) Applicant: SHIN-ETSU CHEMICAL CO., LTD., Tokyo 1000005 (JP)
(72) Inventor: TAKAGI, Kazunori, Annaka-shi, Gunma 379-0224 (JP); HIROKAMI, Munenao, Annaka-shi, Gunma 379-0224 (JP)
(74) Representative: Mewburn Ellis LLP
(86) International application number: PCT/JP2023/016788
(87) International publication number: WO 2023/233891

(57) **Abstract**

Provided is a hydrophilic copolymer containing a structural unit (a) represented by formula (1) and a structural unit (b) represented by formula (2), whereby a coating film having excellent hydrophilicity and antifogging properties can be obtained. 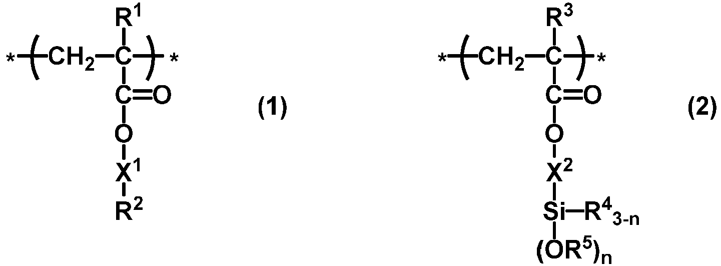 (In formula (1), R represents a hydrogen atom or a methyl group, R² represents -(C₂H₄O)ₘ-R⁶ or -(C₃H₆O)ₘ-R⁶, m represents an integer of 1-50, R⁶ represents a hydrogen atom or a C1-6 alkyl group, and X¹ represents a divalent linking group, and
in formula (2), R³ represents a hydrogen atom or a methyl group, R⁴ and R⁵ each independently represent a C1-10 alkyl group or a C6-10 aryl group, X² represents a divalent linking group, n represents an integer of 1-3, and an asterisk * represents a bond to an adjacent structural unit.)

## Description

### TECHNICAL FIELD

The present invention relates to a hydrophilic copolymer and to a hydrophilic copolymer-containing hydrophilic composition.

### BACKGROUND ART

In recent years, there has been a growing desire to minimize the fogging of substrates formed of organic materials such as plastic or inorganic materials such as glass.

The fogging of a substrate is typically ameliorated by coating a hydrophilic film onto the surface of the substrate. For example, Patent Document 1 discloses, as a coating agent capable of imparting hydrophilicity to a substrate, a coating composition to which has been added a hydrophilic copolymer having a highly hydrophilic quaternary ammonium salt structure.

However, a film formed with this coating composition lacks sufficient water resistance; after coming into contact with water, some of the hydrophilic composition within the film dissolves out, resulting in a deterioration of surface properties such as hydrophilicity and fog resistance. When such places dry off, water drip marks sometimes remain on the film.

In addition, the heat resistance is inadequate; after the film has been left at rest for 24 hours in a 120°C environment, the fog resistance of the film is sometimes lost.

### PRIOR ART DOCUMENTS

### PATENT DOCUMENTS

Patent Document 1: JP-A 2018-162431

### SUMMARY OF INVENTION

### TECHNICAL PROBLEM

In light of these circumstances, the objects of this invention are to provide a hydrophilic copolymer which gives a film of excellent hydrophilicity and fog resistance, and to provide a hydrophilic composition containing this hydrophilic copolymer.

### SOLUTION TO PROBLEM

The inventors have conducted intensive investigations aimed at achieving the above objects. As a result, they have discovered that specific hydrophilic copolymers have excellent water resistance and give long-lasting and heat-resistant films which can impart hydrophilicity and fog resistance to substrates formed of organic materials such as plastic or inorganic materials such as glass. This discovery ultimately led to the present invention.

Accordingly, the invention provides:
1. A hydrophilic copolymer having constitutional units (a) of formula (1) below and constitutional units (b) of formula (2) below 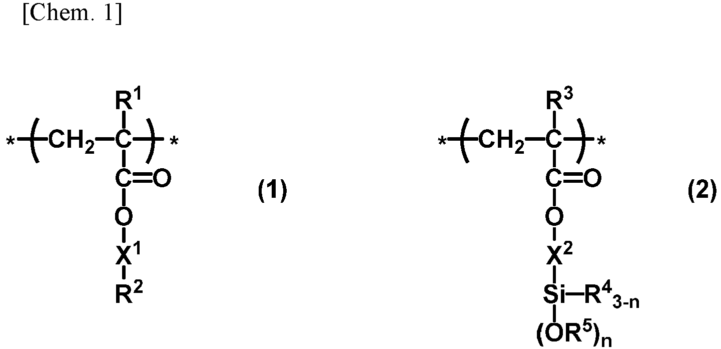 (wherein, in formula (1), R¹ is a hydrogen atom or a methyl group, R² is -(C₂H₄O)ₘ-R⁶ or -(C₃H₆O)ₘ-R⁶, m is an integer from 1 to 50, R⁶ is a hydrogen atom or an alkyl group of 1 to 6 carbon atoms, and X¹ is a divalent linking group;
   in formula (2), R³ is a hydrogen atom or a methyl group, R⁴ and R⁵ are each independently an alkyl group of 1 to 10 carbon atoms or an aryl group of 6 to 10 carbon atoms, X² is a divalent linking group, n is an integer from 1 to 3, and an asterisk * denotes a bond to a neighboring constitutional unit);
2. The hydrophilic copolymer of 1 above, wherein X¹ and X² are each independently a divalent linking group having one or more bond selected from the group consisting of urethane, urea, thiourethane and thiourea bonds;
3. A hydrophilic composition containing the hydrophilic copolymer of 1 or 2 above; and
4. A film obtained by curing the hydrophilic composition of 3 above.

### ADVANTAGEOUS EFFECTS OF INVENTION

The hydrophilic copolymer of the invention provides a hydrophilic composition which has an excellent water resistance and is able to form a long-lasting and heat-resistant film that can impart hydrophilicity and fog resistance to organic substrates such as plastic and inorganic substrates such as glass.

### DESCRIPTION OF EMBODIMENTS

The invention is described more fully below.

### Hydrophilic Copolymer

The hydrophilic copolymer according to this invention (also referred to below simply as "the copolymer") includes subsequently described constitutional units (a) and (b).

The respective constitutional units of the hydrophilic copolymer of the invention are described below.

Constitutional unit (a) included in the hydrophilic copolymer of the invention is represented by formula (1) below. 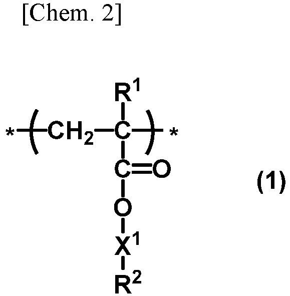 In the formula, an asterisk * has the same meaning as above.

In formula (1), R¹ is a hydrogen atom or a methyl group, and is preferably a hydrogen atom.

R² is -(C₂H₄O)ₘ-R⁶ or -(C₃H₆O)ₘ-R⁶; and m is an integer from 1 to 50, preferably an integer from 2 to 10, and more preferably an integer from 2 to 5.

R⁶ is a hydrogen atom or an alkyl group of 1 to 6 carbon atoms. This alkyl group of 1 to 6 carbon atoms may be linear, branched or cyclic. Specific examples include methyl, ethyl, n-propyl, isopropyl, n-butyl, isobutyl, sec-butyl, tert-butyl, n-pentyl, n-hexyl and cyclohexyl groups.

Of these, from the standpoint of enhancing the hydrophilicity of the film, R⁶ is preferably an alkyl group of 1 to 3 carbon atoms, more preferably a methyl or ethyl group, and even more preferably a methyl group.

Specific examples of R² include, but are not limited to, those of the formulas shown below.

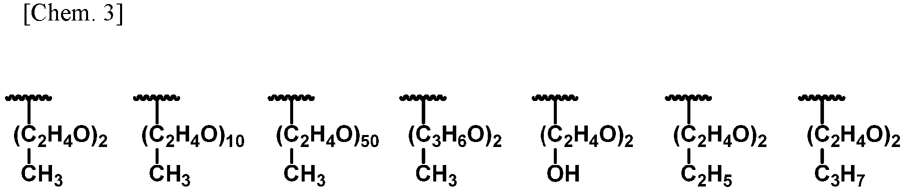

X¹ is a divalent linking group. This divalent linking group is not particularly limited, although a divalent linking group having one or more bond selected from the group consisting of urethane, urea, thiourethane and thiourea bonds is preferred. Linking groups of the formula -(CH₂)ₖ₁-Z-(CH₂)ₖ₂- (wherein Z is a urethane bond, urea bond, thiourethane bond or thiourea bond; and k1 and k2 are each independently an integer from 1 to 5, preferably an integer from 2 to 4) are more preferred.

Specific examples of the divalent linking group represented by X¹ include, but are not limited to, those of the following formulas.

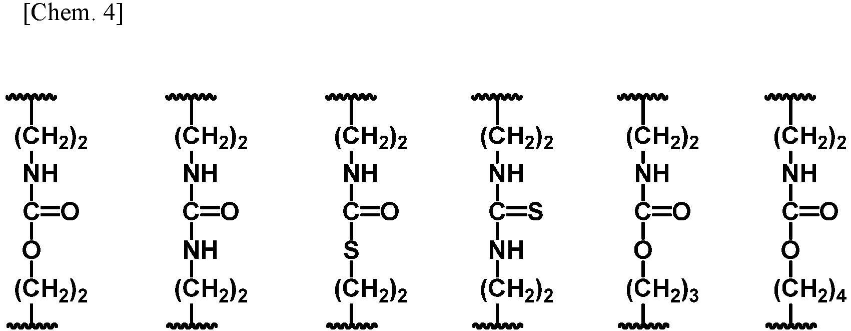

Specific examples of constitutional unit (a) represented by formula (1) above include, but are not limited to, those of the following formulas. 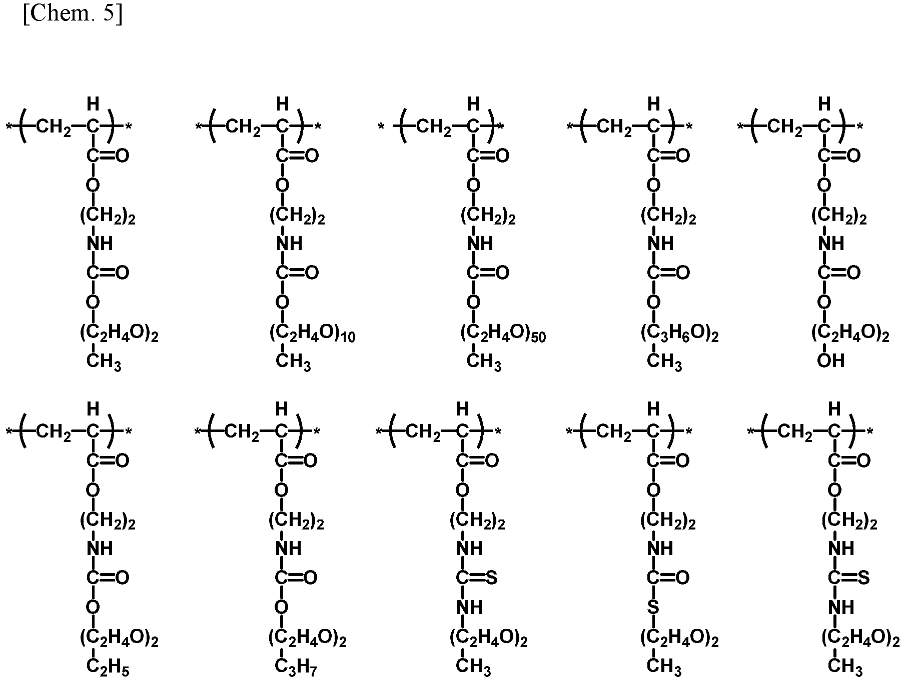 In these formulas, an asterisk * has the same meaning as above.

Constitutional unit (b) included in the hydrophilic copolymer of the invention is represented by formula (2) below.

The hydrolyzable silyl group included in constitutional unit (b) is capable of crosslink reacting on its own (self-crosslinking). By way of this, a hydrophilic copolymer-containing crosslinked structure forms in the film. 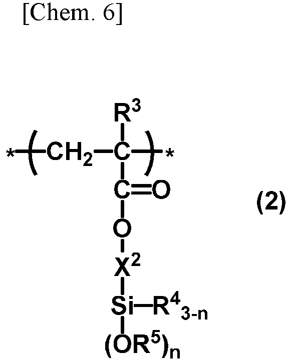 In this formula, an asterisk * has the same meaning as above.

In formula (2), R³ is a hydrogen atom or a methyl group, and is preferably a methyl group.

R⁴ and R⁵ are each independently an alkyl group of 1 to 10, preferably 1 to 8, and more preferably 1 to 6, carbon atoms, or an aryl group of 6 to 10, preferably 6 to 8, carbon atoms.

The alkyl groups represented by R⁴ and R⁵ may be linear, branched or cyclic. Specific examples include methyl, ethyl, n-propyl, isopropyl, n-butyl, isobutyl, s-butyl, t-butyl, n-pentyl, n-hexyl and cyclohexyl groups.

Specific examples of aryl groups represented by R⁴ and R⁵ include phenyl and tolyl groups.

Of these, R⁴ is preferably an alkyl group of 1 to 3 carbon atoms, and more preferably a methyl group; and R⁵ is preferably an alkyl group of 1 to 3 carbon atoms, and more preferably a methyl or ethyl group.

The letter 'n' represents an integer from 1 to 3, and is preferably 3.

X² represents a divalent linking group. This divalent linking group is not particularly limited, although a divalent linking group having one or more bond selected from the group consisting of urethane, urea, thiourethane and thiourea bonds is preferred; a linking group represented by -(CH₂)ₖ₁-Z-(CH₂)ₖ₂- (where Z is a urethane bond, a urea bond, a thiourethane bond or a thiourea bond; and k1 and k2 are each independently an integer from 1 to 5, preferably from 2 to 4) is more preferred.

Specific examples of the divalent linking groups represented by X² include, but are not limited to, those of the following formulas. Of these, urea bond-containing linking groups of formula (3) below are preferred.

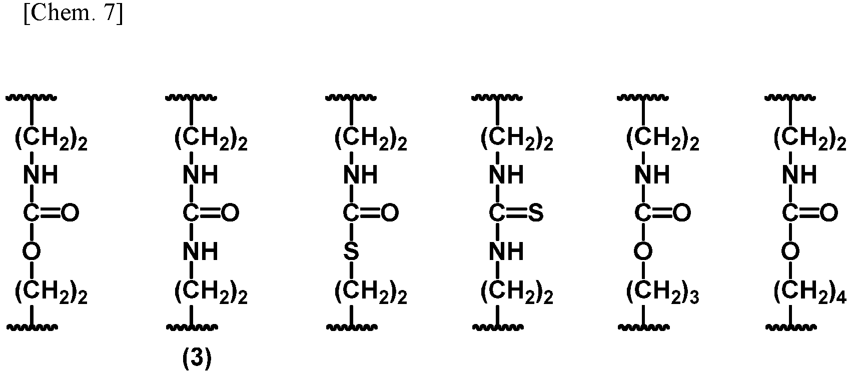

Specific examples of constitutional units (b) of above formula (2) include, but are not limited to, those of the following formulas. 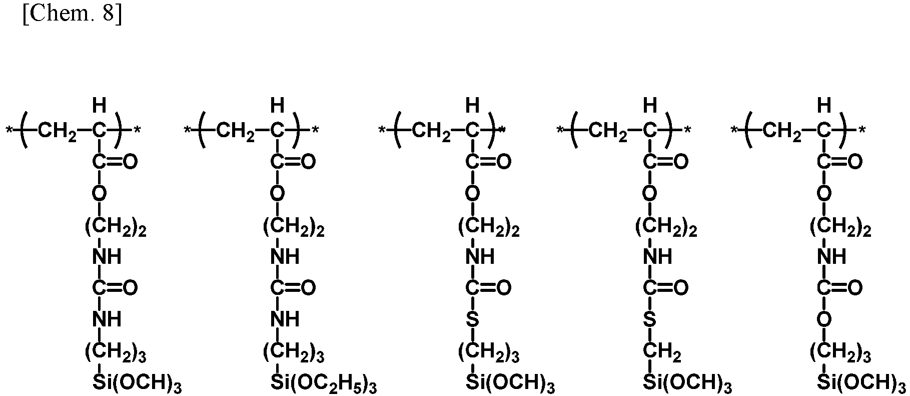 In this formula, an asterisk * has the same meaning as above.

In the hydrophilic copolymer of the invention, the constitutional unit (a) content is preferably from 20 to 99 wt%, more preferably from 50 to 95 wt%, and even more preferably from 60 to 90 wt%. At a constitutional unit (a) content of 20 wt% or more, the copolymer has a better hydrophilicity and, when rendered into a film, the film has a good hydrophilicity. On the other hand, at a constitutional unit (a) content of 95 wt% or less, the hydrophilicity of the copolymer does not become too high and, when the copolymer is rendered into a film, the film has a good water resistance.

The content of constitutional unit (b) is preferably from 1 to 80 wt%, more preferably from 5 to 50 wt%, and even more preferably from 10 to 40 wt%.

The total content of constitutional units (a) and (b) within the hydrophilic copolymer of the invention is preferably from 51 to 100 wt%, more preferably from 80 to 100 wt%, and even more preferably from 90 to 100 wt%.

In addition to above constitutional units (a) and (b), the hydrophilic copolymer of the invention may include constitutional unit (c) of formula (4) below. 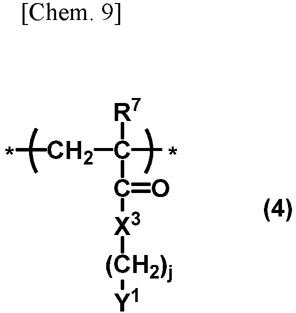 In this formula, an asterisk * has the same meaning as above.

In formula (4), R⁷ is a hydrogen atom or a methyl group; a methyl group is preferred.

X³ is -NH- or -O-; -O- is preferred.

Y¹ is a group selected from the group consisting of a hydrogen atom and hydroxyl, carboxyl, amino, isocyanate, epoxy, alkoxy (-OR) and hydrolyzable silyl groups.

In the alkoxy groups (-OR) of Y¹, the alkyl group represented by R is exemplified by substituted or unsubstituted alkyl groups of 1 to 6 carbon atoms. Specific examples of the alkoxy group include methoxy, ethoxy, n-propoxy, i-propoxy, n-butoxy, sec-butoxy, t-butoxy, n-pentyloxy, n-hexyloxy, cyclopentyloxy and cyclohexyloxy groups. Some or all of the hydrogen atoms bonded to carbon atoms on the alkyl group represented by R may be substituted with halogen atoms such as chlorine, fluorine or bromine or with other substituents such as cyano groups.

Examples of the hydrolyzable silyl groups of Y¹ include alkoxysilyl groups such as trimethoxysilyl, triethoxysilyl, dimethoxysilyl, diethoxymethylsilyl, monomethoxydimethylsilyl and monoethoxydimethylsilyl groups; carboxylate silyl groups such as the acetoxysilyl group; halosilyl groups such as the trichlorosilyl, dichlorosilyl and monochlorosilyl groups; aminosilyl groups, oximesilyl groups and hydrosilyl groups.

Of these, Y¹ is preferably a hydrogen atom or a hydroxyl group.

The letter 'j' is an integer from 0 to 10, preferably an integer from 0 to 6, more preferably an integer from 1 to 4, and even more preferably an integer from 2 to 4. When j is 0, Y¹ is a hydrogen atom.

In cases where the hydrophilic copolymer of the invention includes constitutional unit (c), such as when the copolymer of the invention and a curing agent having a functional group capable of a crosslinking reaction with Y¹ on constitutional unit (c) are used together, a crosslinked structure can be formed by the curing agent and the copolymer. Also, when the copolymer of the invention and a curing catalyst such as an acid catalyst are used together, the copolymer can undergo a crosslinking reaction on its own (self-crosslinking). Therefore, a film formed of a composition containing the hydrophilic copolymer of the invention and a curing agent has a crosslinked structure and can exhibit excellent water resistance.

From this standpoint, in formula (4) above, Y¹ is more preferably a hydroxyl group. When the copolymer of the invention includes constitutional units (c) in which Y¹ is a hydroxyl group, by combining the copolymer of the invention with a curing agent having an isocyanate group, a crosslinked structure can be formed even under low-temperature conditions (e.g., 110°C or below). It is thus possible to form a film composed of the composition according to the invention even on substrates having a low heat resistance.

Specific examples of constitutional unit (c) represented by formula (4) above include, but are not limited to, those of the following formulas. 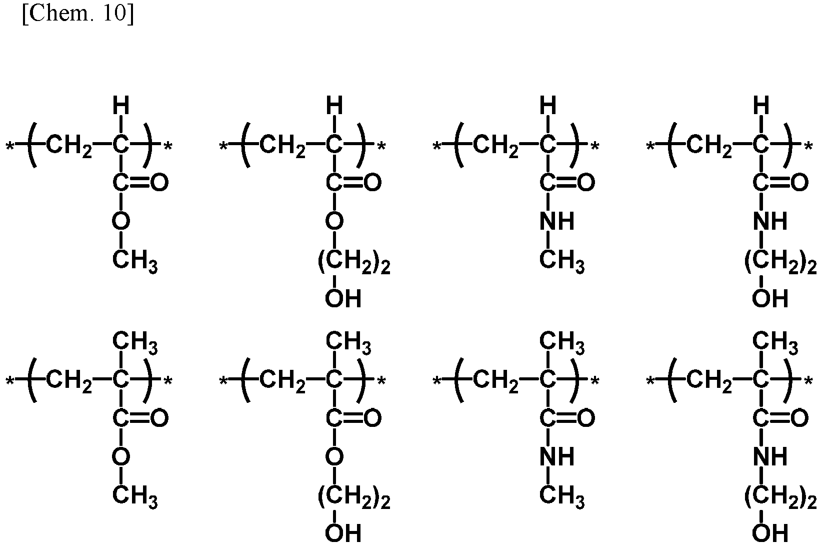 In these formulas, an asterisk * has the same meaning as above.

In cases where the hydrophilic copolymer of the invention includes constitutional unit (c), the content thereof, although not particularly limited, is preferably from 1 to 50 wt%, more preferably from 3 to 20 wt%, and even more preferably from 5 to 10 wt%.

The various constitutional units included in the hydrophilic copolymer of the invention may be arranged in any order. The inventive copolymer may be an alternating copolymer, a random copolymer or a block-type copolymer.

The weight-average molecular weight of the hydrophilic copolymer of the invention is not particularly limited. From the standpoint of increasing the affinity to organic solvents and the hardness of the film, the weight-average molecular weight is preferably from 1,000 to 1,000,000, more preferably from 5,000 to 700,000, even more preferably from 300,000 to 600,000, and still more preferably from 400,000 to 500,000. The weight-average molecular weight is a value determined by gel permeation chromatography (GPC) using polystyrene as the reference material and tetrahydrofuran as the developing solvent.

The viscosity of the hydrophilic copolymer of the invention is not particularly limited. However, in terms of the compatibility with organic solvents and the workability, the viscosity is preferably from 0.01 to 0.5 Pa·s (temperature, 25°C). The viscosity is a value measured with a Brookfield-type rotational viscometer.

The hydrophilic copolymer has a glass transition temperature which is preferably from -10°C to 50°C. The glass transition temperature is a value measured in accordance with JIS K7121.

The hydrophilic copolymer of the invention can be obtained by a known method. For example, as shown in the reaction scheme below, it can be obtained by polymerizing an isocyanate group-containing polymerizable monomer like that shown in formula (5) below in the presence of a polymerization initiator and in a nitrogen or other inert gas atmosphere, and subsequently reacting the resulting polymer with an amino alcohol of formula (6) below and an organosilicon compound of formula (7) below in an open-air atmosphere or in a nitrogen or other inert gas atmosphere.

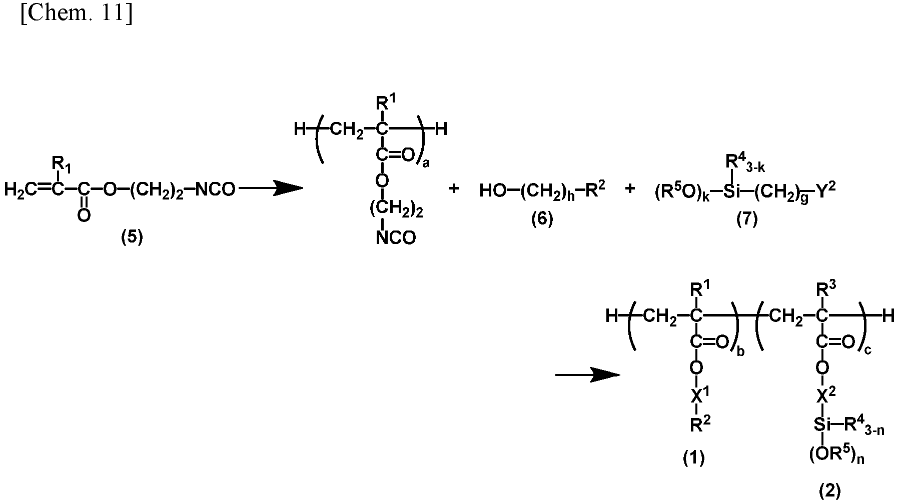

In the foregoing formulas, R¹ to R⁵, X¹, X² and n have the same meanings as above. The letter 'h' represents an integer from 1 to 10 and the letter 'g' represents an integer from 1 to 3. Y² represents a functional group selected from the group consisting of -NH(R'), -SH and -OH; R' represents a hydrogen atom or an alkyl group of 1 to 6 carbon atoms; and a, b and c are values such that the contents of the respective constitutional units fall within the above-described ranges.

The alkyl group of 1 to 6 carbon atoms is exemplified by the same groups as mentioned above.

A commercial product, such as Karenz^{®} AOI from Showa Denko KK, may be used as the isocyanate group-containing polymerizable monomer of formula (5).

A thermal polymerization initiator is preferred as the polymerization initiator. The polymerization initiator is added in an amount, with respect to the total weight of the monomer that is copolymerized, of preferably from 0.5 to 30 wt%, more preferably from 1 to 20 wt%, and even more preferably from 2 to 10 wt%. The polymerization initiator may be added all at once or may be added several times in divided amounts.

Specific, non-limiting, examples of the compound represented by formula (7) above are shown below. Of these, the compound represented by formula (8) is preferred. 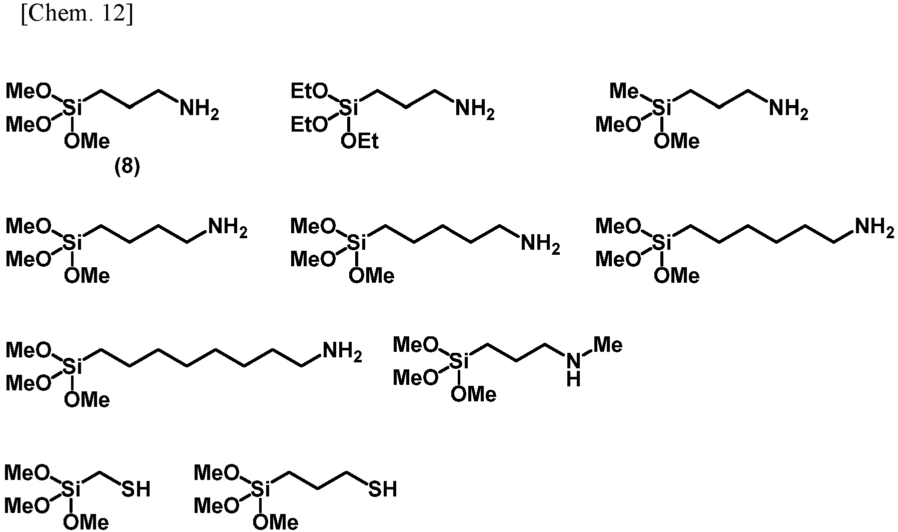 In these formulas, Me stands for a methyl group and Et stands for an ethyl group.

Although the above reaction may be carried out in the absence of a solvent, if necessary, it may be carried out in an organic solvent such as methyl ethyl ketone or 1,2-dimethoxyethane within a range that does not hinder the reaction.

The reaction temperature is preferably from 0°C to the boiling point of the solvent, and more preferably from 20 to 80°C. The reaction time is preferably from 1 to 24 hours, and more preferably from 5 to 10 hours.

If necessary, the solids concentration of the hydrophilic copolymer obtained by the above method may be adjusted or the hydrophilic copolymer may be subjected to solvent exchange or filtration treatment, following which additives may be compounded therewith. Also, the hydrophilic copolymer formed by polymerization may be purified by, for example, precipitation or reprecipitation in hexane or the like, and dissolved together with additives in a solvent suitable for the intended use.

### Hydrophilic Composition

The hydrophilic composition of the invention (also referred to below simply as "the composition") includes one or more of the above hydrophilic copolymers. The content of the hydrophilic copolymer included in the inventive composition is not particularly limited. However, from the standpoint of the hydrophilicity of the composition, the content is preferably from 1 to 50 wt%, and more preferably from 5 to 25 wt%, of the overall composition.

The inventive composition may include additives and the like within ranges that do not compromise the objects of the invention.

Examples of additives include acids such as hydrochloric acid, sulfuric acid, nitric acid, acetic acid, formic acid, oxalic acid and maleic acid; alkalis such as ammonia, methyl amine and ethyl amine; organometallic salts, Lewis acids, alkyltin ester compounds, leveling agents and surfactants. Of these, by adding an organometallic salt, curing at 25°C and 50% RH is possible, enabling a highly durable hydrophilic film to be obtained.

The leveling agent and surfactant are included in order to enhance the film uniformity. Use may be made of known leveling agents and surfactants; commercial products are especially preferred because of their ready availability.

Examples of organometallic salts include sodium acetate, potassium acetate, sodium propionate, potassium propionate, sodium formate, potassium formate and tin octanoate.

Specific examples of Lewis acids include tetraisopropyl titanate, tetrabutyl titanate, aluminum triisobutoxide, aluminum triisopropoxide, aluminum acetylacetonate, tin chloride (SnCl₄), titanium chloride (TiCl₄) and zinc chloride (ZnCl₄).

Specific examples of alkyltin ester compounds include dibutyltin diacetate, dibutyltin dilaurate, dioctyltin dilaurate, dibutyltin dioctoate, dioctyltin dioctoate and dioctyltin diversatate.

One of these may be used alone or two or more may be used together.

In cases where the inventive composition includes an organometallic salt, the content thereof per 100 parts by weight of the above hydrophilic copolymer is preferably from 0.05 to 50 parts by weight, and more preferably from 0.1 to 5 parts by weight.

The hydrophilic composition of the invention may optionally include a solvent. The solvent is not particularly limited, provided that it can dissolve or disperse the hydrophilic copolymer and additives, does not react with the various ingredients and can be easily removed in the subsequently described drying step.

Specific examples of the solvent include methanol, ethanol, isopropanol, tetrahydrofuran, cyclohexanone, methyl ethyl ketone, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, toluene, ethyl acetate, ethyl lactate, methyl lactate, dimethyl sulfoxide and water.

One of these may be used alone or two or more may be used together.

The composition of the invention has a solids concentration which, in terms of the coatability and workability, is preferably from 5 to 80 wt%, and more preferably from 10 to 30 wt%.

The composition of the invention has a viscosity which, in terms of the coatability and workability, is preferably from 0.01 to 0.05 Pa·s (temperature, 25°C).

Also, the composition of the invention may be a one-part liquid system, or may be a system that uses two or more liquids which are mixed prior to use.

The inventive composition is suitable for various types of substrates and can impart hydrophilicity to these.

Specific examples of materials making up the substrate include glass; synthetic resins (polymethyl methacrylate resins, polyethylene terephthalate resins, polybutylene terephthalate resins, polyethylene naphthalate resins, ABS resins, polycarbonate resins, polystyrene resins, epoxy resins, unsaturated polyester resins, melamine resins, diallyl phthalate resins, polyimide resins, urethane resins, nylon resins, polyethylene resins, polypropylene resins, polyvinyl chloride resins, fluoroplastics (polytetrafluoroethylene resins, polychlorotrifluoroethylene resins, polyvinylidene fluoride resins, perfluoroalkoxy fluoroplastics, tetrafluoroethylene-hexafluoropropylene copolymer resins, ethylene-tetrafluoroethylene copolymer resins, ethylene/chlorotrifluoroethylene copolymer resins, etc.), polybutadiene, polyisopropylene, SBR, nitrile rubber, EPM, EPDM, epichlorohydrin rubber, neoprene rubber, polysulfide, butyl rubber, etc.); metals (iron, aluminum, stainless steel, titanium, copper, brass, and alloys thereof, etc.); natural fibers such as cellulose, cellulose derivatives, cellulose analogs (chitin, chitosan, porphyran, etc.), cotton, silk and wool; regenerated fibers such as rayon; semi-synthetic fibers such as acetate; synthetic fibers such as vinylon, polyester, nylon, polyethylene, polypropylene, polyurethane and polyaramid fibers; and biconstituent fibers (e.g., polyester/cotton) of these fibers. These materials may be in the form of, for example, a substrate, sheet, film, fibers, and various types of articles made therefrom.

A hydrophilic coat can be obtained by applying the inventive composition onto the surface of a substrate or the like to form a film.

Methods of application that may be used include bar coating, dip coating, spin coating, spray coating, float coating, brush coating, gravure coating, roll transfer coating, blade coating, air knife coating, slit coating, screen coating, inkjet coating and flexography. Of these, bar coating is preferred.

Following application of the composition onto a substrate, a cured film can be obtained by letting the composition stand at room temperature in an open-air atmosphere. The standing time is preferably from 12 to 240 hours, and more preferably from 24 to 120 hours.

Alternatively, heating may be carried out in order to shorten the curing step.

In this case, the heating temperature is preferably between 40°C and 250°C, and more preferably between 80°C and 120°C.

The heating time is preferably from 10 seconds to 12 hours, and more preferably from 30 seconds to 3 hours.

The heating atmosphere may be either an open-air atmosphere or an inert gas (e.g., nitrogen, argon or the like) atmosphere.

The film thickness (dry film thickness) is not particularly limited, but is preferably from 0.1 to 50 µm, and more preferably from 1 to 20 µm.

### EXAMPLES

Examples and Comparative Examples are given below by way of illustration, although the invention is not limited by these Examples.

### (1) Preparation of Hydrophilic Copolymer

### [Example 1-1]

A 100.47 g amount of 1,2-dimethoxyethane, 42.34 g of Karenz^{®} AOI (Showa Denko KK) of formula (9) below and 0.72 g of the oil-soluble azo polymerization initiator V-59 (Fujifilm Wako Pure Chemical Corporation) of formula (10) below were added to a reactor and reacted for 4 hours at 80°C.

Next, 30.64 g of diethylene glycol monomethyl ether, 8.07 g of 3-aminopropyltrimethoxysilane and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 164 g (solids concentration, 43 wt%) of a 1,2-dimethoxyethane solution of Hydrophilic Copolymer P1 (constitutional unit (a) content, 85.0 wt%; constitutional unit (b) content, 15.0 wt%; weight-average molecular weight, 440,000) was obtained by filtration.

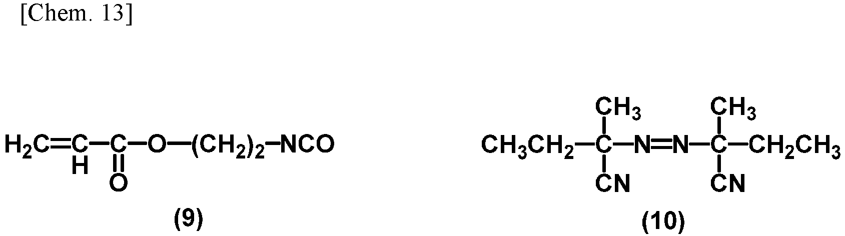

### [Example 1-2]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, 40.01 g of dipropylene glycol monomethyl ether, 5.38 g of 3-aminopropyltrimethoxysilane and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 176 g (solids concentration, 44 wt%) of a 1,2-dimethoxyethane solution of Hydrophilic Copolymer P2 (constitutional unit (a) content, 90.0 wt%; constitutional unit (b) content, 10.0 wt%; weight-average molecular weight, 480,000) was obtained by filtration.

### [Example 1-3]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, 82.50 g of Uniox^{®} M-550 (NOF Corporation; average molecular weight, 550) of formula (11) below, 26.89 g of 3-aminopropyltrimethoxysilane and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 234 g (solids concentration, 58 wt%) of a 1,2-dimethoxyethane solution of Hydrophilic Copolymer P3 (constitutional unit (a) content, 50.0 wt%; constitutional unit (b) content, 50.0 wt%; weight-average molecular weight, 690,000) was obtained by filtration.

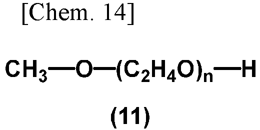

### [Example 1-4]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, heating of the reactor was stopped and 90.00 g of Uniox^{®} M-1000 (NOF Corporation; average molecular weight, 1,000) of formula (11) above, 37.65 g of 3-aminopropyltrimethoxysilane and 0.15 g of the dioctyltin catalyst Neostann U-830 (Nitto Kasei Co., Ltd.) were added and reacted for 4 hours at 70°C.

Following the reaction, once the temperature of the solution within the reactor fell to 25°C or below, 257 g (solids concentration, 59 wt%) of a 1,2-dimethoxyethane solution of Hydrophilic Copolymer P4 (constitutional unit (a) content, 30.0 wt%; constitutional unit (b) content, 70.0 wt%; weight-average molecular weight, 980,000) was obtained by filtration.

### [Example 1-5]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, 30.64 g of diethylene glycol monomethyl ether, 8.84 g of 3-mercaptotrimethoxymethylsilane and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 165 g (solids concentration, 44 wt%) of a 1,2-dimethoxyethane solution of Hydrophilic Copolymer P5 (constitutional unit (a) content, 85.0 wt%; constitutional unit (b) content, 15.0 wt%; weight-average molecular weight, 460,000) was obtained by filtration.

### [Example 1-6]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, 30.64 g of diethylene glycol monomethyl ether, 7.35 g of 3-aminopropyldimethoxymethylsilane and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 162 g (solids concentration, 43 wt%) of a 1,2-dimethoxyethane solution of Hydrophilic Copolymer P6 (constitutional unit (a) content, 85.0 wt%; constitutional unit (b) content, 15.0 wt%; weight-average molecular weight, 450,000) was obtained by filtration.

### [Comparative Example 1-1]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, 36.05 g of diethylene glycol monomethyl ether and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 166 g (solids concentration, 43 wt%) of a 1,2-dimethoxyethane solution of Hydrophilic Polymer P7 (constitutional unit (a) content, 100.0 wt%; weight-average molecular weight, 490,000) was obtained by filtration.

### [Comparative Example 1-2]

A 100.47 g amount of 1,2-dimethoxyethane, 42.34 g of Karenz^{®} AOI (Showa Denko KK) of above formula (9) and 0.72 g of the oil-soluble azo polymerization initiator V-59 (Fujifilm Wako Pure Chemical Corporation) of above formula (10) were added to a reactor and reacted for 4 hours at 80°C.

Next, 8.17 g of methanol, 8.07 g of 3-aminopropyltrimethoxysilane and 0.15 g of the dioctyltin catalyst Neostann U-830 (Nitto Kasei Co., Ltd.) were added and reacted for 4 hours at 70°C.

Following the reaction, heating of the reactor was stopped and, once the temperature of the solution within the reactor fell to 25°C or below, 146 g (solids concentration, 41 wt%) of a 1,2-dimethoxyethane solution of Copolymer P8 (weight-average molecular weight, 400,000) was obtained by filtration.

### (2) Preparation of Coating Composition (Hydrophilic Composition)

### [Example 2-1]

A 1.16 g amount of the 1,2-dimethoxyethane solution of Hydrophilic Copolymer P1 obtained in Example 1-1, 0.84 g of isopropanol and 0.02 g of the titanium-based catalyst D-25 (Shin-Etsu Chemical Co., Ltd.) were added to a reactor, giving a clear yellow liquid (C1).

### [Example 2-2]

A 0.86 g amount of the 1,2-dimethoxyethane solution of Hydrophilic Copolymer P2 obtained in Example 1-2, 1.14 g of isopropanol and 0.02 g of the titanium-based catalyst D-25 (Shin-Etsu Chemical Co., Ltd.) were added to a reactor, giving a clear yellow liquid (C2).

### [Example 2-3]

A 0.85 g amount of the methyl ethyl ketone solution of Hydrophilic Copolymer P3 obtained in Example 1-3, 1.15 g of isopropanol and 0.02 g of the titanium-based catalyst D-25 (Shin-Etsu Chemical Co., Ltd.) were added to a reactor, giving a clear yellow liquid (C3).

### [Example 2-4]

A 0.85 g amount of the methyl ethyl ketone solution of Hydrophilic Copolymer P4 obtained in Example 1-4, 1.15 g of isopropanol and 0.02 g of the titanium-based catalyst D-25 (Shin-Etsu Chemical Co., Ltd.) were added to a reactor, giving a clear yellow liquid (C4).

### [Example 2-5]

A 1.14 g amount of the methyl ethyl ketone solution of Hydrophilic Copolymer P5 obtained in Example 1-5, 0.86 g of isopropanol and 0.02 g of the titanium-based catalyst D-25 (Shin-Etsu Chemical Co., Ltd.) were added to a reactor, giving a clear yellow liquid (C5).

### [Example 2-6]

A 1.16 g amount of the methyl ethyl ketone solution of Hydrophilic Copolymer P6 obtained in Example 1-6, 0.84 g of isopropanol and 0.02 g of the titanium-based catalyst D-25 (Shin-Etsu Chemical Co., Ltd.) were added to a reactor, giving a clear yellow liquid (C6).

### [Comparative Example 2-1]

A 1.16 g amount of the methyl ethyl ketone solution of Hydrophilic Polymer P6 obtained in Comparative Example 1-1 and 0.84 g of isopropanol were added to a reactor, giving a clear yellow liquid (C7).

### [Comparative Example 2-2]

A 1.22 g amount of the ethyl acetate solution of Polymer P7 obtained in Comparative Example 1-2, 0.78 g of isopropanol and 0.02 g of the titanium catalyst D-25 (Shin-Etsu Chemical Co., Ltd.) were added to a reactor, giving a clear yellow liquid (C8).

### [Comparative Example 2-3]

Ten grams of the hydroxyl group-containing acrylic resin Acrit 6BF-100 (solids concentration, 40 wt%; from Taisei Fine Chemical Co., Ltd.) having a weight-average molecular weight of 75,000, a hydroxyl value of 20 mgKOH/g and a calculated glass transition temperature of 85°C, 0.65 g of Duranate TPA-100 (NCO content, 23 wt%; from Asahi Kasei Corporation), 1.0 g of a methyl ethyl ketone solution (solids concentration, 40 wt%) of Acrit 1WX (Taisei Fine Chemical Co., Ltd.), which is a copolymer containing constitutional units of formulas (12), (13), (14), (15) and (16) below, and 13.6 g of methyl ethyl ketone were mixed together in a reactor, giving a clear yellow liquid (C9). 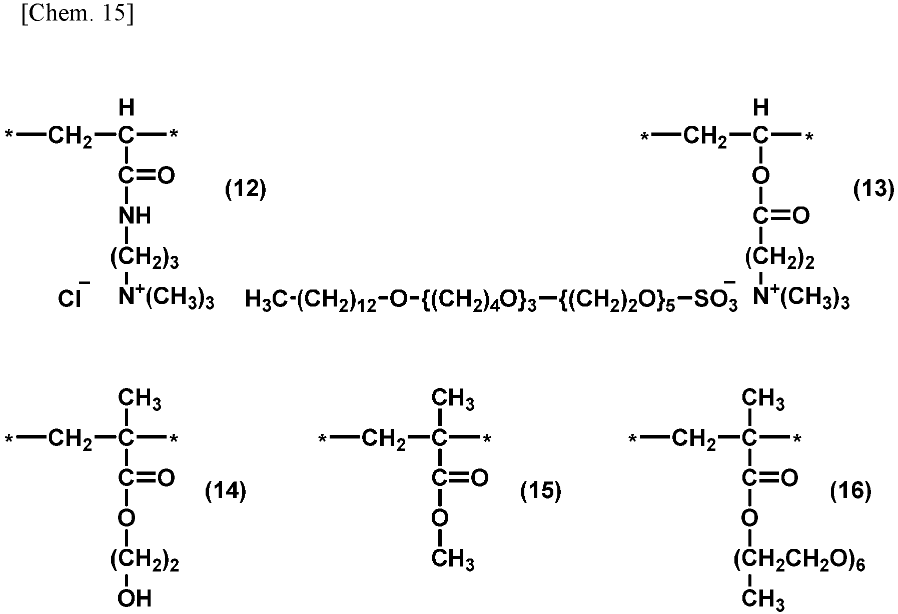 In these formulas, an asterisk * has the same meaning as above.

### (3) Production and Evaluation of Film

### [Examples 3-1 to 3-6, Comparative Examples 3-1 to 3-3]

Coating compositions C1 to C9 obtained in Examples 2-1 to 2-6 and Comparative Examples 2-1 to 2-3 were each applied with a bar coater (No. 14) onto a polycarbonate plate and immediately dried at 120°C for 1 hour, giving a film.

### [Examples 4-1 to 4-6, Comparative Examples 4-1 to 4-3]

Coating compositions C1 to C9 obtained in Examples 2-1 to 2-6 and Comparative Examples 2-1 to 2-3 were each applied with a bar coater (No. 14) onto a polycarbonate plate and left at rest for 24 hours in a 25°C, 50% RH environment, giving a film.

The following tests were carried out on the films produced in the above Examples and Comparative Examples. The results are shown in Tables 1 and 2.

### [Fog Resistance]

The fog resistance of each film was rated as "×" in cases where the film surface fogged up when exhaled on and as "○" in cases where the film surface did not fog up. In addition, the fog resistance was rated as "⊚" in cases where the film surface did not fog up when placed above a 40°C water bath at a height of 3 cm from the water's surface for 60 seconds.

### [Water Drip Marks]

In the above fog resistance evaluation, after being left at rest above a 40°C water bath for 60 seconds and evaluated for fog resistance, the film was air dried at 25°C for 10 minutes. The surface was then irradiated with a 1,000 lumen flashlight to visually determine whether water drop marks are visible on the film surface. Cases in which water drop marks were visible are rated as "+"; cases in which water drop marks were not visible are rated as "-".

### [Warm Water Resistance]

Each of the above films was immersed in 40°C water for 24 hours, after which water on the surface was wiped off with a paper wipe. The film was then air dried for 10 minutes at 25°C and the fog resistance evaluation described above was carried out.

Next, each film was additionally immersed in 40°C water for 216 hours, after which water on the surface was wiped off with a paper wipe. The film was then air dried for 10 minutes at 25°C and the fog resistance evaluation described above was carried out.

### [Moisture Resistance]

Each of the above films was left at rest for 24 hours in a thermohygrostat (KCL-2000W, Tokyo Rikakikai Co., Ltd.) set to 50°C and 98% RH. The film was then air dried for 10 minutes at 25°C, and the fog resistance evaluation described above was carried out.

### [Heat Resistance]

Each of the above films was left at rest for 24 hours in a thermostatic chamber (SPHH-201, Espec Corporation) set to 120°C. The film was then left at rest for 10 minutes at 25°C, and the fog resistance evaluation described above was carried out.

**[Table 1]**

| | Coating composition | Initial fog resistance | Water drip marks | Warm water resistance | | Moisture resistance | Heat resistance |
|---|---|---|---|---|---|---|---|
| | | | | After 24 hrs immersion | After 240 hrs immersion | 24 hrs at 50°C/ 98% RH | 120°C, 24 hrs |
| Example 3-1 | C1 | ⊚ | - | ⊚ | ⊚ | ⊚ | ⊚ |
| Example 3-2 | C2 | ⊚ | - | ⊚ | ⊚ | ⊚ | ⊚ |
| Example 3-3 | C3 | ⊚ | - | ○ | ○ | ⊚ | ⊚ |
| Example 3-4 | C4 | ⊚ | - | ○ | ○ | ⊚ | ⊚ |
| Example 3-5 | C5 | ⊚ | - | ⊚ | ○ | ⊚ | ⊚ |
| Example 3-6 | C6 | ⊚ | - | ⊚ | ○ | ⊚ | ⊚ |
| Comparative Example 3-1 | C7 | ⊚ | + | × | × | ○ | ⊚ |
| Comparative Example 3-2 | C8 | × | - | × | × | × | × |
| Comparative Example 3-3 | C9 | ⊚ | + | × | × | ○ | × |

**[Table 2]**

| | Coating composition | Initial fog resistance | Water drip marks | Warm water resistance | | Moisture resistance | Heat resistance |
|---|---|---|---|---|---|---|---|
| | | | | After 24 hrs immersion | After 240 hrs immersion | 24 hrs at 50°C/ 98% RH | 120°C, 24 hrs |
| Example 4-1 | C1 | ⊚ | - | ⊚ | ⊚ | ⊚ | ⊚ |
| Example 4-2 | C2 | ⊚ | - | ⊚ | ⊚ | ⊚ | ⊚ |
| Example 4-3 | C3 | ⊚ | - | ○ | ○ | ⊚ | ⊚ |
| Example 4-4 | C4 | ⊚ | - | ○ | ○ | ⊚ | ⊚ |
| Example 4-5 | C5 | ⊚ | - | ⊚ | ○ | ⊚ | ⊚ |
| Example 4-6 | C6 | ⊚ | - | ⊚ | ○ | ⊚ | ⊚ |
| Comparative Example 4-1 | C7 | ⊚ | + | × | × | ○ | ⊚ |
| Comparative Example 4-2 | C8 | × | - | × | × | × | × |
| Comparative Example 4-3 | C9 | ⊚ | + | × | × | ○ | × |

As shown in Tables 1 and 2, the films obtained in Examples 3-1 to 3-6 and Examples 4-1 to 4-6 retained excellent fog resistances after the warm water resistance tests (24 hour immersion, 240 hour immersion), in the moisture resistance test (24 hours at 50°C and 98% RH) and even after the heat resistance test (24 hours at 120°C). The film in Example 3-1 had a particularly outstanding durability.

On the other hand, the films in Comparative Examples 3-1, 3-3, 4-1 and 4-3 lost their fog resistances after 24 hours immersion in warm water and so these films clearly had a poor water resistance. The film in Comparative Example 4-1 lost its fog resistance following the heat resistance test, and thus had a poor heat resistance.

## Claims

1. A hydrophilic copolymer comprising constitutional units (a) of formula (1) below and constitutional units (b) of formula (2) below 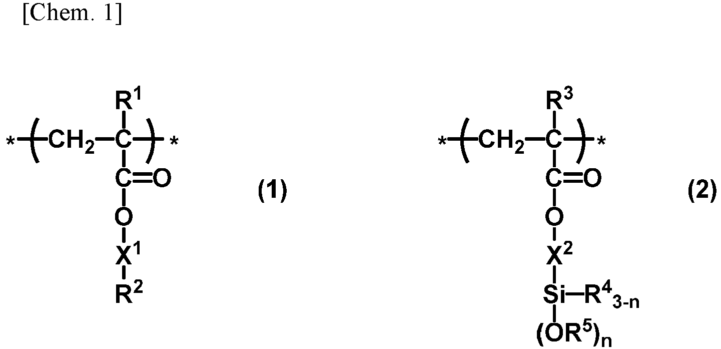 (wherein, in formula (1), R¹ is a hydrogen atom or a methyl group, R² is -(C₂H₄O)ₘ-R⁶ or -(C₃H₆O)ₘ-R⁶, m is an integer from 1 to 50, R⁶ is a hydrogen atom or an alkyl group of 1 to 6 carbon atoms, and X¹ is a divalent linking group;
in formula (2), R³ is a hydrogen atom or a methyl group, R⁴ and R⁵ are each independently an alkyl group of 1 to 10 carbon atoms or an aryl group of 6 to 10 carbon atoms, X² is a divalent linking group, n is an integer from 1 to 3, and an asterisk * denotes a bond to a neighboring constitutional unit).

2. The hydrophilic copolymer of claim 1, wherein X¹ and X² are each independently a divalent linking group having one or more bond selected from the group consisting of urethane, urea, thiourethane and thiourea bonds.

3. A hydrophilic composition comprising the hydrophilic copolymer of claim 1 or 2.

4. A film obtained by curing the hydrophilic composition of claim 3.
